# EUROPEAN PATENT APPLICATION

(11) **EP 4 626 115 A1**
(43) Date of publication of application: **01.10.2025**
(21) Application number: 23910217.1
(22) Date of filing: 15.12.2023
(51) Int. Cl.: H04W 72/23

(54) **RESOURCE INDICATION METHOD AND COMMUNICATION APPARATUS**

(30) Priority: 27.12.2022 CN 202211684691
(71) Applicant: Huawei Technologies Co., Ltd., Shenzhen, Guangdong 518129 (CN)
(72) Inventor: XUE, Yifan, Shenzhen, Guangdong 518129 (CN); MADIER, Louis, Shenzhen, Guangdong 518129 (CN); TIE, Xiaolei, Shenzhen, Guangdong 518129 (CN)
(74) Representative: Maiwald GmbH
(86) International application number: PCT/CN2023/139179
(87) International publication number: WO 2024/140287

(57) **Abstract**

This application provides a resource indication method and a communication apparatus. The method includes: A network device 110 sends information 1 to a terminal device 120, where the information 1 is used for scheduling a physical downlink shared channel (physical downlink shared channel, PDSCH) #1, the information 1 further indicates a time domain resource A and a frequency domain resource A that are used for transmission of the PDSCH #1, and the frequency domain resource A includes a frequency domain resource 1; and the network device 110 sends the PDSCH #1 to the terminal device 120 via a resource set 1, where the resource set 1 is a part (of resources or resource sets) of a resource set 2, and the resource set 2 corresponds to the frequency domain resource 1 and the time domain resource A. In this way, overall resource utilization of the resource set 2 can be improved in this application.

## Description

This application claims priority to Chinese Patent Application No. 202211684691.2, filed with the China National Intellectual Property Administration on December 27, 2022 and entitled "RESOURCE INDICATION METHOD AND COMMUNICATION APPARATUS", which is incorporated herein by reference in its entirety.

### TECHNICAL FIELD

This application relates to the field of communication technologies, and more specifically, to a resource indication method and a communication apparatus.

### BACKGROUND

Currently, time-frequency resources used for transmission of a physical downlink shared channel (physical downlink shared channel, PDSCH) are indicated based on time-frequency resource blocks (corresponding to a large frequency domain range and a large time domain range). However, this indication manner may not satisfy a requirement on high overall resource utilization in some scenarios, for example, a scenario in which overall resource utilization of time-frequency resources used for transmission of a wake-up signal needs to be improved. Therefore, new indication needs to be performed for the time-frequency resources used for transmission of the PDSCH.

### SUMMARY

This application provides a resource indication method and a communication apparatus. In this way, overall resource utilization of time-frequency resources in some scenarios can be improved.

According to a first aspect, a resource indication method is provided, and includes: A network device sends first information to a first terminal device, where the first information is used for scheduling a PDSCH, the first information further indicates a time domain resource and a frequency domain resource that are used for transmission of the PDSCH, and the frequency domain resource includes a first frequency domain resource; and the network device sends the PDSCH to the first terminal device via a first resource set, where the first resource set is a part of a second resource set, and the second resource set corresponds to the first frequency domain resource and the time domain resource.

It may be understood that the first resource set being a part of the second resource set includes: The first resource set is a part of resources in the second resource set, or the first resource set is a part of resource sets in the second resource set. This is not limited. Correspondingly, that the network device sends the PDSCH to the first terminal device via the first resource set may be: The network device sends the PDSCH to the first terminal device via a part of the second resource set.

Specifically, the part (for example, the first resource set) of the second resource set may be used for transmission of the PDSCH, and a resource in the second resource set may be further used for transmission of another signal (for example, a wake-up signal). In this way, overall resource utilization of the second resource set can be improved in this application.

In a possible implementation, the frequency domain resource further includes a second frequency domain resource. The sending the PDSCH to the first terminal device includes: sending the PDSCH to the first terminal device via the first resource set and a third resource set, where the third resource set corresponds to the second frequency domain resource and the time domain resource.

In this way, in this application, a quantity of resources used for transmission of the PDSCH can be increased.

In a possible implementation, before the sending first information to a first terminal device, the method further includes: sending second information to the first terminal device, where the second information indicates a first frequency domain range and a second frequency domain range, the first frequency domain resource is in the first frequency domain range, and the second frequency domain resource is in the second frequency domain range.

In this way, it is convenient for the first terminal device to determine a position of the resource used for transmission of the PDSCH.

In a possible implementation, before the sending the PDSCH to the first terminal device, the method further includes: sending third information to the first terminal device, where the third information indicates at least one of a time domain position of the first resource set in the second resource set and a frequency domain position of the first resource set in the second resource set.

In this way, it is convenient for the first terminal device to more quickly and/or more accurately determine the position of the first resource set in the second resource set, to determine time-frequency resources used for transmission of the PDSCH.

In a possible implementation, a method for mapping the PDSCH to the first resource set and the third resource set includes one of the following: first mapping the PDSCH to the first resource set, and then mapping the PDSCH to the third resource set; first mapping the PDSCH to the third resource set, and then mapping the PDSCH to the first resource set; or first mapping the PDSCH to the second frequency domain resource and a frequency domain resource corresponding to the first resource set, and then mapping the PDSCH to the time domain resource.

In a possible implementation, before the sending the PDSCH to the first terminal device, the method further includes: determining a first available resource set based on the first resource set and the third resource set, where the first available resource set is used for encoding and decoding of the PDSCH; or determining a second available resource set based on the second resource set and the third resource set, where the second available resource set is used for encoding and decoding of the PDSCH, and the second available resource set includes the first resource set.

In this way, it is convenient for the first terminal device to determine a manner in which the PDSCH is mapped to the first resource set.

In a possible implementation, the method further includes: sending fourth information to the first terminal device, where the fourth information indicates a fourth resource set and a fifth resource set, and the fourth resource set and the fifth resource set are used for transmission of a demodulation reference signal (demodulation reference signal, DMRS) of the PDSCH; and the fourth resource set belongs to the first resource set, and the fifth resource set belongs to the third resource set.

In this way, it can be convenient for the first terminal device to determine the time-frequency resources used for transmission of the DMRS, to better implement channel demodulation, and further improve performance of demodulating the PDSCH.

In a possible implementation, the method further includes: sending fifth information to the first terminal device, where the fifth information indicates a sixth resource set, the sixth resource set is used for transmission of a DMRS of the PDSCH, and the sixth resource set belongs to the third resource set; and the sixth resource set is further used for determining a seventh resource set, the seventh resource set is used for transmission of the DMRS, and the seventh resource set belongs to the first resource set.

In this way, it can be convenient for the first terminal device to determine the time-frequency resources used for transmission of the DMRS, to better implement channel demodulation, and further improve performance of demodulating the PDSCH.

In a possible implementation, the second resource set is used for transmission of a wake-up signal, and the wake-up signal is used for waking up a second terminal device.

According to the foregoing technical solution, in this application, a resource that is used for transmission of the PDSCH and that is in the time-frequency resources used for transmission of the wake-up signal can be flexibly configured, to reasonably utilize the time-frequency resources used for transmission of the wake-up signal, and reduce overheads. Specifically, resource reusing is performed on a part of the time-frequency resources used for transmission of the wake-up signal. This can increase a quantity of time-frequency resources used for transmission of the PDSCH, and can further reduce overheads of the time-frequency resources used for transmission of the wake-up signal.

In a possible implementation, the first resource set is further used for transmission of the wake-up signal.

In this way, the first resource set is reused for transmission of the PDSCH, so that resource utilization of the first resource set can be improved in this application, and the overall resource utilization of the second resource set can be improved.

According to a second aspect, a resource indication method is provided, and includes: receiving first information from a network device, where the first information is used for scheduling a PDSCH, the first information further indicates a time domain resource and a frequency domain resource that are used for transmission of the PDSCH, and the frequency domain resource includes a first frequency domain resource; and receiving the PDSCH from the network device via a first resource set, where the first resource set is a part of a second resource set, and the second resource set corresponds to the first frequency domain resource and the time domain resource.

In a possible implementation, the frequency domain resource further includes a second frequency domain resource, and the receiving the PDSCH from the network device includes: receiving the PDSCH from the network device via the first resource set and a third resource set, where the third resource set corresponds to the second frequency domain resource and the time domain resource.

In a possible implementation, before the receiving first information from a network device, the method further includes: receiving second information from the network device, where the second information indicates a first frequency domain range and a second frequency domain range, the first frequency domain resource is in the first frequency domain range, and the second frequency domain resource is in the second frequency domain range.

In a possible implementation, before the receiving the PDSCH from the network device, the method further includes: receiving third information from the network device, where the third information indicates at least one of a time domain position of the first resource set in the second resource set and a frequency domain position of the first resource set in the second resource set.

In a possible implementation, a method for mapping the PDSCH to the first resource set and the third resource set includes one of the following: first mapping the PDSCH to the first resource set, and then mapping the PDSCH to the third resource set; first mapping the PDSCH to the third resource set, and then mapping the PDSCH to the first resource set; or first mapping the PDSCH to the second frequency domain resource and a frequency domain resource corresponding to the first resource set, and then mapping the PDSCH to the time domain resource.

In a possible implementation, before the receiving the PDSCH from the network device, the method further includes: determining a first available resource set based on the first resource set and the third resource set, where the first available resource set is used for encoding and decoding of the PDSCH; or determining a second available resource set based on the second resource set and the third resource set, where the second available resource set is used for encoding and decoding of the PDSCH, and the second available resource set includes the first resource set.

In a possible implementation, the method further includes: receiving fourth information from the network device, where the fourth information indicates a fourth resource set and a fifth resource set, and the fourth resource set and the fifth resource set are used for transmission of a DMRS of the PDSCH; and the fourth resource set belongs to the first resource set, and the fifth resource set belongs to the third resource set.

In a possible implementation, the method further includes: receiving fifth information from the network device, where the fifth information indicates a sixth resource set, the sixth resource set is used for transmission of a DMRS of the PDSCH, and the sixth resource set belongs to the third resource set; and the sixth resource set is further used for determining a seventh resource set, the seventh resource set is used for transmission of the DMRS, and the seventh resource set belongs to the first resource set.

In a possible implementation, the second resource set is used for transmission of a wake-up signal, and the wake-up signal is used for waking up a second terminal device.

In a possible implementation, the first resource set is further used for transmission of the wake-up signal.

According to a third aspect, a communication apparatus is provided, and is configured to perform the method in the first aspect. In a design, the apparatus may include a one-to-one corresponding module/unit for performing the method/operation/step/action described in the first aspect. The module/unit may be a hardware circuit, or may be software, or may be implemented by a hardware circuit in combination with software. In another design, the apparatus includes a transceiver unit, configured to: send first information to a first terminal device, where the first information is used for scheduling a PDSCH, the first information further indicates a time domain resource and a frequency domain resource that are used for transmission of the PDSCH, and the frequency domain resource includes a first frequency domain resource; and the transceiver unit is further configured to: send the PDSCH to the first terminal device via a first resource set, where the first resource set is a part of a second resource set, and the second resource set corresponds to the first frequency domain resource and the time domain resource.

In a possible implementation, the frequency domain resource further includes a second frequency domain resource, and the transceiver unit is further configured to: send the PDSCH to the first terminal device via the first resource set and a third resource set, where the third resource set corresponds to the second frequency domain resource and the time domain resource.

In a possible implementation, the transceiver unit is further configured to: send second information to the first terminal device, where the second information indicates a first frequency domain range and a second frequency domain range, the first frequency domain resource is in the first frequency domain range, and the second frequency domain resource is in the second frequency domain range.

In a possible implementation, the transceiver unit is further configured to: send third information to the first terminal device, where the third information indicates at least one of a time domain position of the first resource set in the second resource set and a frequency domain position of the first resource set in the second resource set.

In a possible implementation, a method for mapping the PDSCH to the first resource set and the third resource set includes one of the following: first mapping the PDSCH to the first resource set, and then mapping the PDSCH to the third resource set; first mapping the PDSCH to the third resource set, and then mapping the PDSCH to the first resource set; or first mapping the PDSCH to the second frequency domain resource and a frequency domain resource corresponding to the first resource set, and then mapping the PDSCH to the time domain resource.

In a possible implementation, the apparatus further includes a processing unit, where the processing unit is configured to: determine a first available resource set based on the first resource set and the third resource set, where the first available resource set is used for encoding and decoding of the PDSCH; or determine a second available resource set based on the second resource set and the third resource set, where the second available resource set is used for encoding and decoding of the PDSCH, and the second available resource set includes the first resource set.

In a possible implementation, the transceiver unit is further configured to: send fourth information to the first terminal device, where the fourth information indicates a fourth resource set and a fifth resource set, and the fourth resource set and the fifth resource set are used for transmission of a DMRS of the PDSCH; and the fourth resource set belongs to the first resource set, and the fifth resource set belongs to the third resource set.

In a possible implementation, the transceiver unit is further configured to: send fifth information to the first terminal device, where the fifth information indicates a sixth resource set, the sixth resource set is used for transmission of a DMRS of the PDSCH, and the sixth resource set belongs to the third resource set; and the sixth resource set is further used for determining a seventh resource set, the seventh resource set is used for transmission of the DMRS, and the seventh resource set belongs to the first resource set.

In a possible implementation, the second resource set is used for transmission of a wake-up signal, and the wake-up signal is used for waking up a second terminal device.

In a possible implementation, the first resource set is further used for transmission of the wake-up signal.

According to a fourth aspect, a communication apparatus is provided, and is configured to perform the method in the second aspect. In a design, the apparatus may include a one-to-one corresponding module/unit for performing the method/operation/step/action described in the first aspect. The module/unit may be a hardware circuit, or may be software, or may be implemented by a hardware circuit in combination with software. In another design, the apparatus includes a transceiver unit, configured to: receive first information from a network device, where the first information is used for scheduling a PDSCH, the first information further indicates a time domain resource and a frequency domain resource that are used for transmission of the PDSCH, and the frequency domain resource includes a first frequency domain resource; and the transceiver unit is further configured to: receive the PDSCH from the network device via a first resource set, where the first resource set is a part of a second resource set, and the second resource set corresponds to the first frequency domain resource and the time domain resource.

In a possible implementation, the frequency domain resource further includes a second frequency domain resource, and the transceiver unit is further configured to: receive the PDSCH from the network device via the first resource set and a third resource set, where the third resource set corresponds to the second frequency domain resource and the time domain resource.

In a possible implementation, the transceiver unit is further configured to: receive second information from the network device, where the second information indicates a first frequency domain range and a second frequency domain range, the first frequency domain resource is in the first frequency domain range, and the second frequency domain resource is in the second frequency domain range.

In a possible implementation, the transceiver unit is further configured to: receive third information from the network device, where the third information indicates at least one of a time domain position of the first resource set in the second resource set and a frequency domain position of the first resource set in the second resource set.

In a possible implementation, a method for mapping the PDSCH to the first resource set and the third resource set includes one of the following: first mapping the PDSCH to the first resource set, and then mapping the PDSCH to the third resource set; first mapping the PDSCH to the third resource set, and then mapping the PDSCH to the first resource set; or first mapping the PDSCH to the second frequency domain resource and a frequency domain resource corresponding to the first resource set, and then mapping the PDSCH to the time domain resource.

In a possible implementation, the communication apparatus further includes a processing unit, where the processing unit is configured to: determine a first available resource set based on the first resource set and the third resource set, where the first available resource set is used for encoding and decoding of the PDSCH; or determine a second available resource set based on the second resource set and the third resource set, where the second available resource set is used for encoding and decoding of the PDSCH, and the second available resource set includes the first resource set.

In a possible implementation, the transceiver unit is further configured to: receive fourth information from the network device, where the fourth information indicates a fourth resource set and a fifth resource set, and the fourth resource set and the fifth resource set are used for transmission of a DMRS of the PDSCH; and the fourth resource set belongs to the first resource set, and the fifth resource set belongs to the third resource set.

In a possible implementation, the transceiver unit is further configured to: receive fifth information from the network device, where the fifth information indicates a sixth resource set, the sixth resource set is used for transmission of a DMRS of the PDSCH, and the sixth resource set belongs to the third resource set; and the sixth resource set is further used for determining a seventh resource set, the seventh resource set is used for transmission of the DMRS, and the seventh resource set belongs to the first resource set.

In a possible implementation, the second resource set is used for transmission of a wake-up signal, and the wake-up signal is used for waking up a second terminal device.

In a possible implementation, the first resource set is further used for transmission of the wake-up signal.

According to a fifth aspect, a communication apparatus is provided, and includes a processor, where the processor is configured to: by executing a computer program or instructions or by using a logic circuit, cause the communication apparatus to perform the method according to either of the first aspect and any one of possible implementations of the first aspect; or cause the communication apparatus to perform the method according to either of the second aspect and any one of possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided, and includes a logic circuit and an input/output interface, where the input/output interface is configured to input and/or output a signal; and the logic circuit is configured to perform the method according to either of the first aspect and any one of possible implementations of the first aspect; or the logic circuit is configured to perform the method according to either of the second aspect and any one of possible implementations of the second aspect.

According to a seventh aspect, a computer-readable storage medium is provided, where the computer-readable storage medium stores a computer program or instructions. When the computer program or the instructions are run on a computer, the method according to either of the first aspect and any one of possible implementations of the first aspect is caused to be performed; or the method according to either of the second aspect and any one of possible implementations of the second aspect is caused to be performed.

According to an eighth aspect, a computer program product is provided, and includes instructions. When the instructions are run on a computer, the method according to either of the first aspect and any one of possible implementations of the first aspect is caused to be performed; or the method according to either of the second aspect and any one of possible implementations of the second aspect is caused to be performed.

For descriptions of beneficial effects of the second aspect to the eighth aspect, refer to descriptions of beneficial effects of the first aspect. Details are not described herein again.

### BRIEF DESCRIPTION OF DRAWINGS

FIG. 1 is a diagram of an applicable communication system 100 according to an embodiment of this application;
FIG. 2 is a diagram in which a terminal device 120 receives a wake-up signal via a first module;
FIG. 3 is a diagram of a waveform when a wake-up signal is modulated by using OOK;
FIG. 4 is a diagram of a waveform when a wake-up signal is modulated by using FSK;
FIG. 5 is a schematic interaction flowchart of a resource indication method 500;
FIG. 6 is a diagram of resource mapping 600;
FIG. 7 is a diagram of resource mapping 700;
FIG. 8 is a diagram of resource mapping 800;
FIG. 9 is a schematic interaction flowchart of a resource indication method 900;
FIG. 10 is a diagram of resource mapping 1000;
FIG. 11 is a diagram of an application of resource indication 1100;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application;
FIG. 15 is a block diagram of a communication apparatus 1500 according to an embodiment of this application; and
FIG. 16 is a block diagram of a communication apparatus 1600 according to an embodiment of this application.

### DESCRIPTION OF EMBODIMENTS

The following describes technical solutions of this application with reference to accompanying drawings.

The technical solutions of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, a system evolved after 5G, for example, a 6th generation (6th generation, 6G) system, and a non-terrestrial network (non-terrestrial network, NTN) system such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as the base station, or may be used as the terminal device. The satellite may be a non-terrestrial base station or a non-terrestrial device such as an unmanned aerial vehicle, a hot air balloon, a low-orbit satellite, a medium-orbit satellite, or a high-orbit satellite.

The technical solutions of this application are applicable to both a homogeneous network scenario and a heterogeneous network scenario, and have no limitation on a transmission point. The technical solutions may be coordinated multi-point transmission between macro base stations, between micro base stations, and between a macro base station and a micro base station, and are applicable to both an FDD system and a TDD system. The technical solutions of this application are not only applicable to a low-frequency scenario (sub 6G), but also applicable to a high-frequency scenario (above 6 GHz), terahertz, optical communication, and the like. The technical solutions of this application are not only applicable to communication between a network device and a terminal, but also applicable to communication between network devices, communication between terminals, communication in an internet of vehicles, communication in an internet of things, communication in an industrial internet, and the like.

The technical solutions of this application may also be applied to a scenario in which the terminal is connected to a single base station. The base station connected to the terminal and a core network (core network, CN) connected to the base station are of a same standard. For example, the CN is a 5G core, the base station corresponds to a 5G base station, and the 5G base station is directly connected to the 5G core; or the CN is a 6G core, the base station is a 6G base station, and the 6G base station is directly connected to the 6G core. The technical solutions of this application are also applicable to a dual connectivity (dual connectivity, DC) scenario in which the terminal is connected to at least two base stations.

The technical solutions of this application are also applicable to a macro-micro scenario including different forms of base stations in a communication network. For example, the base station may be a satellite, an air balloon station, an unmanned aerial vehicle station, or the like. The technical solutions of this application are also applicable to a scenario in which both a wide-coverage base station and a small-coverage base station exist.

The technical solutions of this application may be applied to a scenario in which a high-reliability service requirement exists, such as a port, industrial manufacturing, transportation, or a coal mine.

The technical solutions of this application may be further applied to 5.5G, 6G, and a wireless communication system after 6G. An application scenario includes but is not limited to terrestrial cellular communication, NTN, satellite communication, high-altitude platform station (high-altitude platform station, HAPS) communication, vehicle-to-everything (vehicle-to-everything, V2X), integrated access and backhaul (integrated access and backhaul, IAB), reconfigurable intelligent surface (reconfigurable intelligent surface, RIS) communication, and the like.

The terminal in this application may be a device having wireless receiving and sending functions, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

In this application, a communication apparatus configured to implement a function of the terminal device may be a terminal device, or may be an apparatus that can support the terminal device in implementing the function, for example, a chip system. The apparatus may be installed in the terminal device or used together with the terminal device. In this application, the chip system may include a chip, or may include the chip and another discrete component.

The network device in this application is a device having wireless receiving and sending functions, and is configured to communicate with a terminal device. An access network device may be a node in a radio access network (radio access network, RAN), and may also be referred to as a base station, or may be referred to as a RAN node. The access network device may be an evolved NodeB (evolved NodeB, eNB, or eNodeB) in LTE, a base station in a 5G network, for example, a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), or a cloud access network (cloud radio access network, C-RAN).

The network device in this application may further include various forms of base stations, such as a macro base station, a micro base station (also referred to as a small cell), a relay station, a transmission reception point (transmission reception point, TRP), a transmission point (transmission point, TP), a mobile switching center, and a device that functions as a base station in device-to-device (device-to-device, D2D), vehicle-to-everything (vehicle-to-everything, V2X), and machine-to-machine (machine, M2M) communication, and a network device in an NTN communication system. This is not specifically limited in this application.

The network device in this application may further include a network element or a module that implements a part of functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between the DU and the RU in an O-RAN system, or the like. This is not limited.

In this application, an apparatus configured to implement a function of the network device may be a network device, or may be an apparatus that can support the network device in implementing the function, for example, a chip system. The apparatus may be installed in the network device or used together with the network device. In embodiments of this application, the chip system may include a chip, or may include the chip and another discrete component.

The following first describes an example of an applicable communication system in embodiments of this application.

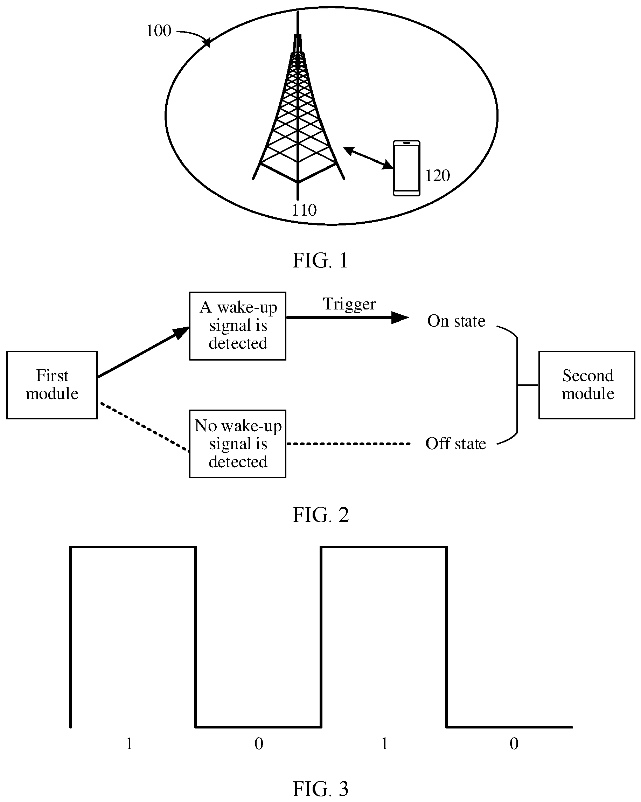

FIG. 1 is a diagram of an applicable communication system 100 according to an embodiment of this application. As shown in FIG. 1, the communication system 100 includes a network device 110 and a terminal device 120. A quantity of terminal devices and a quantity of network devices that are included in the communication system 100 are not limited in this application. The terminal device 120 may be any terminal device listed above, and the network device 110 may be any network device listed above. As shown in FIG. 1, when the network device 110 communicates with the terminal device 120, the network device 110 manages one or more cells, and each cell may include one or more terminal devices.

In a possible implementation, the network device 110 and the terminal device 120 form a communication system of a single cell. Without loss of generality, the cell may be denoted as a cell #1. The network device 110 may be a network device in the cell #1, or the network device 110 may serve a terminal device (for example, the terminal device 120) in the cell #1.

Optionally, the cell may be further understood as an area in coverage of a radio signal of the network device 110.

The following briefly describes technical content related to the technical solutions of this application.

When the terminal device 120 is in an idle (idle) state/inactive (inactive) state, the terminal device 120 may periodically receive paging (paging). In an example, that the terminal device 120 performs a paging receiving procedure includes: When the terminal device 120 is in the idle state/inactive state, the terminal device 120 obtains a paging frame (paging frame, PF) and a position of a paging occasion (paging occasion, PO) in the PF through calculation based on an identifier (identifier, ID) of the terminal device 120 (UE ID), and receives the paging (paging) on the PO. Performing the paging receiving procedure is merely an example for description. For example, for details, reference may be made to a related standard. This is not limited in this application.

Generally, regardless of whether the terminal device 120 performs the paging receiving procedure when the terminal device 120 is in the idle/inactive state or performs data receiving when the terminal device 120 is in a connected state, the terminal device 120 uses a same receiving module (or a receiver, or a receiver circuit) in both cases. In this application, a module that completes these functions (or performs related steps) may be referred to as a second module. It may be understood that, the second module is merely named for differentiation. A specific name of the second module does not limit the protection scope of this application. For example, the second module may alternatively be a second circuit or a main circuit. For ease of description, the following collectively describes the module as the second module.

A process in which the terminal device 120 receives a signal by using the second module may be referred to as a process in which transmission of the signal is performed on a link (which may be denoted as a second link for differentiation). The second link represents a connection relationship between the terminal device 120 and the network device 110, and is a logical concept rather than a physical entity. The second link may also be referred to as a main link. For ease of description, the following collectively describes the link as the second link.

It may be understood that, power consumption caused when the terminal device 120 performs the paging receiving procedure via the second module is high. For example, the terminal device 120 first receives a downlink signal by using a receiving module of the second module, then performs blind detection on a physical downlink control channel (physical downlink control channel, PDCCH), finally decodes a received physical downlink shared channel (physical downlink shared channel, PDSCH), and the like. All of these steps cause high power consumption. In addition, because a circuit structure of the second module is complex, reference power consumption during running of the second module is also high.

To reduce the high power consumption caused when the terminal device 120 performs the paging receiving procedure via the second module, the terminal device 120 may receive a wake-up signal (wake-up signal/radio, WUS/WUR) by using a separate low-power small circuit. The wake-up signal indicates paging-related information, and the paging-related information may include a paged terminal device or a paged terminal device group. The foregoing low-power small circuit may be implemented by using a separate small circuit or chip with a simple structure, so that power consumption of the low-power small circuit is low.

In a possible implementation, the low-power small circuit may alternatively be a wake-up receiver (wake-up receiver, WUR), a wake-up circuit, a low-power circuit, or the like. A specific name of the low-power small circuit is not limited in this application. In this application, the low-power small circuit may be referred to as a first module. It may be understood that, the first module is merely named for differentiation. A specific name of the first module does not limit the protection scope of this application. For example, the first module may alternatively be a first circuit or a wake-up circuit. For ease of description, the following collectively describes the low-power small circuit as the first module.

Similarly, a process in which the terminal device 120 receives a signal by using the first module may be referred to as a process in which transmission of the signal is performed on a link (which may be denoted as a first link for differentiation). The first link represents a connection relationship between the terminal device 120 and the network device 110, and is a logical concept rather than a physical entity. It should be understood that, the wake-up signal is merely an example name. A name of the wake-up signal is not limited in this application. In addition, for descriptions that the terminal device 120 receives the wake-up signal by using the first module, refer to FIG. 2.

FIG. 2 is a diagram in which a terminal device 120 receives a wake-up signal via a first module. As shown in FIG. 2, the terminal device detects the wake-up signal via the first module, and the wake-up signal may carry paging-related indication information. Specifically, the terminal device 120 receives a signal via the first module. If the terminal device 120 fails to detect the wake-up signal associated with the terminal device 120, the terminal device 120 continues to receive the signal by using the first module, and a second module may be in an off state (or a sleep state). If the terminal device detects the wake-up signal associated with the second module, the terminal device 120 triggers wake-up of the second module, that is, the second module is caused to be in/switched to an on state (also referred to as an operating state, or referred to as an active state). After the second module is turned on, the terminal device 120 performs a paging receiving procedure, for example, receives a paging PDCCH, and receives a paging PDSCH after detecting the paging PDCCH on a corresponding PO.

It should be understood that, FIG. 2 is an example in which the wake-up signal carries a part of the paging-related information (for example, a part of a UE ID of a paged terminal device, or an ID of a paged terminal device group) for description. This is not limited. For example, the wake-up signal may alternatively carry all of the paging-related information (for example, a complete UE ID of a paged terminal device). In this case, after the second module is turned on, the terminal device 120 initiates random access and the like. If the wake-up signal carries all of the paging-related information, after the second module is turned on, the terminal device 120 receives the paging-related information.

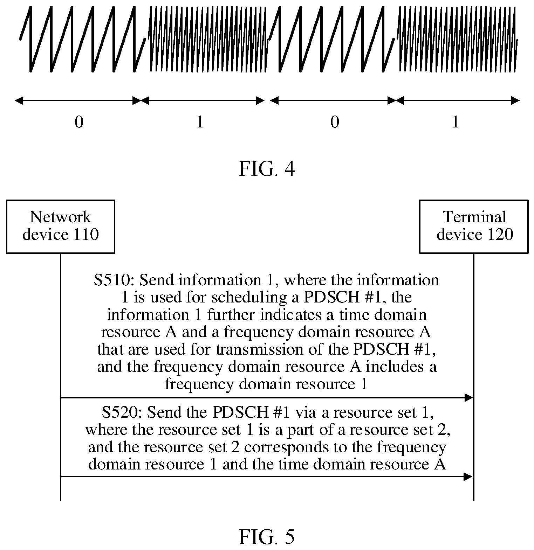

In an example, to ensure a power consumption gain, the wake-up signal may be modulated by using on-off-keying (on-off-keying, OOK) or frequency-shift keying (frequency-shift keying, FSK), and a corresponding wake-up circuit may receive the wake-up signal by using an envelope detection method. For details, refer to FIG. 3 and FIG. 4.

FIG. 3 is a diagram of a waveform when a wake-up signal is modulated by using OOK. As shown in FIG. 3, when the wake-up signal is modulated by using the OOK, each bit (namely, an encoded bit) corresponds to one symbol (symbol). Similarly, the symbol may also be referred to as a chip (chip), or may be referred to as another name. This is not limited herein. When the bit is 1, a signal is sent in a length of the symbol (that is, a transmit power of the signal in the length of the symbol is not 0). When the bit is 0, a signal is not sent in a length of the symbol (that is, a transmit power of the signal in the length of the symbol is 0). As shown in FIG. 3, the waveform shown in FIG. 3 may indicate four bits 1010.

FIG. 4 is a diagram of a waveform when a wake-up signal is modulated by using FSK. As shown in FIG. 4, when the wake-up signal is modulated by using the FSK, different information uses different frequency resources. For example, 2FSK carries 1-bit information. When an information bit is 0, the information is sent on a frequency resource f0, and the information is not sent on a frequency resource f1. When an information bit is 1, the information is sent on a frequency resource f1, and the information is sent on a frequency resource f0. It is assumed that f0<f1, and a waveform of an FSK signal whose information is 0101 is shown in FIG. 4. In this case, in a 1^{st} symbol and a 3^{rd} symbol, a frequency of the signal is low; and in a 2^{nd} symbol and a 4^{th} symbol, the frequency of the signal is high. When demodulating the signal, a receive end may compare a power on f0 and a power on f1 to determine whether the sent information is 0 or 1.

Currently, time-frequency resources used for transmission of a PDSCH are indicated based on time-frequency resource blocks. The time-frequency resource blocks correspond to a large frequency domain range and a large time domain range. For example, the frequency domain range includes a resource block (resource block, RB) 6 to an RB 20, and the time domain range includes a symbol (symbol) 3 to a symbol 14. However, this indication manner may not satisfy a requirement on high overall resource utilization in some scenarios, for example, a scenario in which overall resource utilization of time-frequency resources used for transmission of the wake-up signal needs to be improved. For example, if the time-frequency resources used for transmission of the wake-up signal are used only for transmission of the wake-up signal, this causes the overall resource utilization of the time-frequency resources to be not high. If the overall resource utilization of the time-frequency resources needs to be improved, at least a part of resources in the time-frequency resources may be reused for transmission of another signal, for example, the PDSCH. In this case, an existing manner for indicating a resource used for transmission of the PDSCH needs to be changed, so that the manner is applicable to indicating a resource that is in the time-frequency resources used for transmission of the wake-up signal and that can be used for transmission of the PDSCH.

In conclusion, this application provides a resource indication method and a communication apparatus. In this way, the overall resource utilization of the time-frequency resources can be improved in some scenarios. For example, the overall resource utilization of the time-frequency resources used for transmission of the wake-up signal can be improved.

In embodiments of this application, the part of resources in the time-frequency resources used for transmission of the wake-up signal may be reused for transmission of the PDSCH in this application. For example, when the wake-up signal is modulated by using OOK, a resource element (resource element, RE) of an ON signal used for transmission of the wake-up signal may also be used for transmission of the PDSCH. This is because for a WUR, ON/OFF information may be determined provided that transmit powers at different OOK symbol positions are different. In this way, the part of resources in the time-frequency resources may be further used for transmission of the PDSCH. However, an existing indication of time-frequency resources used for transmission of the PDSCH is performed based on the time-frequency resource blocks, and the part of resources that is in the time-frequency resources and that is used for transmission of another signal cannot be reused for transmission of the PDSCH. Therefore, new indication needs to be performed for the time-frequency resources used for transmission of the PDSCH, to satisfy a requirement on high overall resource utilization of the time-frequency resources in some scenarios.

The following describes a resource indication method and a communication apparatus in this application with reference to the accompanying drawings.

FIG. 5 is a schematic interaction flowchart of a resource indication method 500. A method procedure in FIG. 5 may be performed by a terminal device 120 and a network device 110, or may be performed by modules and/or components (for example, chips or integrated circuits) having corresponding functions and installed in the terminal device 120 and the network device 110. This is not limited. The following uses the terminal device 120 and the network device 110 as an example for description. As shown in FIG. 5, the method 500 includes the following steps.

S510: The network device 110 sends information 1 (for example, first information) to the terminal device 120, where the information 1 is used for scheduling a PDSCH #1, the information 1 further indicates a time domain resource A and a frequency domain resource A that are used for transmission of the PDSCH #1, and the frequency domain resource A includes a frequency domain resource 1.

Correspondingly, the terminal device 120 receives the information 1 from the network device 110, and determines, based on the information 1, the time domain resource A and the frequency domain resource 1 that are used for transmission of the PDSCH #1.

For example, the frequency domain resource A includes an RB 3 to an RB 10, and the time domain resource A includes a symbol 3 to a symbol 14. The frequency domain resource 1 is the RB 3 to the RB 5. It may be understood that, the frequency domain resource A may include only the RB 3 to the RB 5. This is not limited.

In a possible implementation, in S510, that the information 1 further indicates the time domain resource A and the frequency domain resource A that are used for transmission of the PDSCH #1, and the frequency domain resource A includes the frequency domain resource 1 includes two indication manners: explicit indication and implicit indication. For example, for an indication method 1, the information 1 includes sub-information 1, sub-information 2, and sub-information 3. The sub-information 1 indicates the symbol 3 to the symbol 14, and the sub-information 2 indicates the RB 3 to the RB 10. In this way, the sub-information 2 may indicate an entire frequency resource (for example, the frequency domain resource A) used for transmission of the PDSCH #1, and the sub-information 3 indicates the RB 3 to the RB 5, that is, indicates a special frequency resource (for example, the frequency domain resource 1) that is in the frequency domain resource and that is used for transmission of the PDSCH #1. For another example, the information 1 includes sub-information 1, sub-information 2, and sub-information 3. The sub-information 1 indicates the symbol 3 to the symbol 14, the sub-information 2 indicates the RB 6 to the RB 10, that is, indicates a frequency resource (for example, a frequency domain resource 2 in the following) that is used for transmission of the PDSCH #1 and that does not need special processing, and the sub-information 3 indicates the RB 3 to the RB 5, that is, indicates a frequency resource (for example, the frequency domain resource 1) that is in the PDSCH and that needs special processing. In this way, the information 1 indicates, via the sub-information 2 and the sub-information 3, an entire frequency resource (for example, the frequency domain resource A) used for transmission of the PDSCH #1. For the implicit indication, the information 1 includes sub-information 1 and sub-information 2, the sub-information 1 indicates the symbol 3 to the symbol 14, and the sub-information 2 indicates the RB 3 to the RB 10. That the RB 3 to the RB 5 in the RB 3 to the RB 10 indicated by the sub-information 2 is the frequency domain resource 1 may be indicated in another manner.

In a possible implementation, in S510, the information 1 may use the sub-information 1, sub-information 2, and sub-information 3. The sub-information 1 indicates the symbol 3 to the symbol 14, the sub-information 2 indicates the RB 6 to the RB 10, that is, indicates a frequency resource (for example, a frequency domain resource 2 in the following) that is used for transmission of the PDSCH #1 and that does not need special processing, and the sub-information 3 includes 1-bit indication information. For example, if a value of the 1-bit indication information is 0, this indicates that a specific frequency resource (for example, a frequency domain range 1 in the following) is not used for the PDSCH; or if a value of the 1-bit indication information is 1, this indicates that a specific frequency resource (for example, a frequency domain range 1 in the following) is used for the PDSCH. In this case, the specific frequency resource is the frequency domain resource 1. In this way, the frequency resource used for the PDSCH may be indicated by using indication bits as few as possible. It may be understood that, a manner in which the sub-information 3 includes one piece of 1-bit indication information may be further combined with S510a below. In this way, the frequency resource used for the PDSCH #1 may be indicated by using least bits.

In a possible implementation, that the information 1 indicates the time domain resource A and the frequency domain resource A includes: The information 1 indicates the time domain resource A and the frequency domain resource 1. For example, the information 1 indicates the symbol 3 to the symbol 14 and the RB 3 to the RB 5.

In a possible implementation, that the information 1 indicates the time domain resource A and the frequency domain resource A includes: The information 1 indicates the time domain resource A and the frequency domain resource A. That the frequency domain resource A includes the frequency domain resource 1 is implicitly indicated. For example, the information 1 indicates the symbol 3 to the symbol 14 and the RB 3 to the RB 10. The terminal device 120 determines, via other configuration information, that the RB 3 to the RB 5 in the RB 3 to the RB 10 belong to the frequency domain resource 1.

In a possible implementation, the information 1 is control information or scheduling information, for example, downlink control information (downlink control information, DCI).

S520: The network device 110 sends the PDSCH #1 to the terminal device 120 via a resource set 1 (for example, a first resource set).

Correspondingly, the terminal device 120 receives the PDSCH #1 from the network device 110 via the resource set 1.

Specifically, the resource set 1 is a part (resource or resource set) of a resource set 2 (for example, a second resource set), and the resource set 2 corresponds to the frequency domain resource 1 and the time domain resource A. Therefore, in S520, that the network device 110 sends the PDSCH #1 via the resource set 1 may be: The network device 110 sends the PDSCH #1 via the part (resource or resource set) of the resource set 2.

In a possible implementation, the resource set 2 is a resource set used for transmission of another signal. For example, the resource set 2 is a resource set used for transmission of a wake-up signal. Correspondingly, S520 is: The network device 110 transmits the PDSCH #1 to the terminal device 120 via the resource set 1 in the resource set 2 used for transmission of the wake-up signal. It may be understood that, the resource set 1 may be further used for transmission of the wake-up signal, that is, the resource set 1 may be for both transmission of the wake-up signal and transmission of the PDSCH #1. In this way, overall resource utilization of the resource set 2 is improved.

It can be learned from the foregoing descriptions that, the resource set 1 is a part of the resource set 2, the network device 110 sends the PDSCH #1 to the terminal device 120 via the resource set 1, and another resource in the resource set 2 may be used for transmission of another signal (for example, the wake-up signal). According to the foregoing solution, the overall resource utilization of the resource set 2 can be improved in this application.

In a possible implementation, the frequency domain resource A further includes the frequency domain resource 2, and the network device 110 may send the PDSCH #1 to the terminal device 120 via the resource set 1 and a resource set 3 (for example, a third resource set).

Specifically, the resource set 3 corresponds to the frequency domain resource 2 and the time domain resource A. For example, the frequency domain resource A includes the RB 3 to the RB 10, the frequency domain resource 1 includes the RB 3 to the RB 5, and the frequency domain resource 2 includes the RB 6 to the RB 10.

It should be understood that, the resource set 1 includes at least one resource element (resource element, RE), the resource set 2 includes at least one RE, and the resource set 3 includes at least one RE. It may be understood that, REs in the resource set 1 may be distributed in a centralized manner (for example, a plurality of REs are distributed at positions of a plurality of adjacent symbols), or may be distributed in a scattered manner (for example, a plurality of REs are distributed at positions of a plurality of non-adjacent symbols). This is not limited.

According to the foregoing technical solution, in this application, a resource that is used for transmission of the PDSCH and that is in time-frequency resources used for transmission of the wake-up signal can be flexibly configured, to reasonably utilize the time-frequency resources used for transmission of the wake-up signal, and reduce overheads. Specifically, resource reusing is performed on a part of the time-frequency resources used for transmission of the wake-up signal. This can increase a quantity of time-frequency resources used for transmission of the PDSCH, and can further reduce overheads of the time-frequency resources used for transmission of the wake-up signal.

In a possible implementation, the method 500 may further include:

S510a: The network device 110 sends information 2 (for example, second information) to the terminal device 120, where the information 2 indicates a frequency domain range 1 (for example, a first frequency domain range) and a frequency domain range 2 (for example, a second frequency domain range).

Correspondingly, the terminal device 120 receives the information 2 from the network device 110.

For example, if the frequency domain resource 1 includes the RB 3 to the RB 5, and the frequency domain resource 2 includes the RB 6 to the RB 10, the frequency domain range 1 is an RB 1 to the RB 5, and the frequency domain range 2 is the RB 6 to an RB 20. The terminal device 120 determines the frequency domain range 1 and the frequency domain range 2 based on the information 2. Further, the terminal device 120 separately determines the frequency domain resource 1 and the frequency domain resource 2 based on the frequency domain range 1 and the frequency domain range 2. In this way, it is convenient for the terminal device 120 to determine the frequency domain resource A used for transmission of the PDSCH #1.

It may be understood that, S510a is performed before S510.

In a possible implementation, the method 500 may further include:

S520a: The network device 110 sends information 3 (for example, third information) to the terminal device 120, where the information 3 indicates at least one of a time domain position of the resource set 1 in the resource set 2 or a frequency domain position of the resource set 1 in the resource set 2.

Correspondingly, the terminal device 120 receives the information 3 from the network device 110.

Specifically, when a first signal is modulated by using OOK, the information 3 indicates the time domain position of the resource set 1 in the resource set 2; or when a first signal is modulated by using FSK, the information 3 indicates the frequency domain position of the resource set 1 in the resource set 2 (or may also indicate the time domain position, which is not limited). In this way, it is convenient for the terminal device 120 to more quickly and/or more accurately determine the position of the resource set 1 in the resource set 2, to determine time-frequency resources used for transmission of the PDSCH #1.

It may be understood that, S520a is performed before S520.

The following further describes the method 500 with reference to other accompanying drawings.

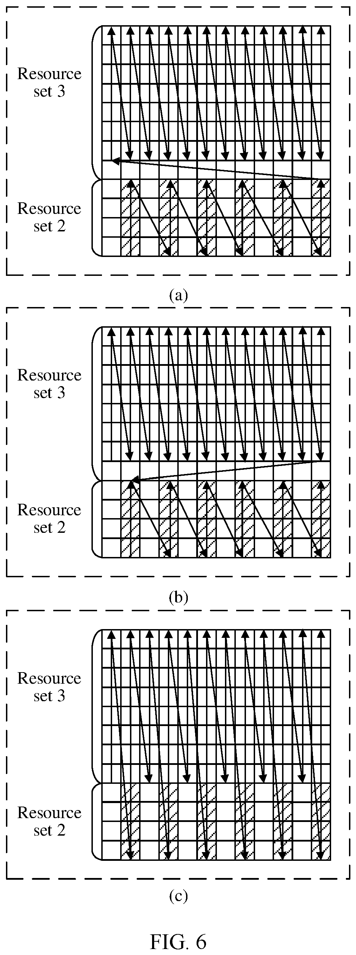

FIG. 6 is a diagram of resource mapping 600. One square indicates one RE, and REs in the resource set 1 are indicated by squares with a twill texture. Because the resource set 1 is a part of the resource set 2, the resource set 1 is not emphasized in FIG. 6, and reference may be made to a part being the squares with the twill texture in the resource set 2. As shown in (a) in FIG. 6, the network device 110 first maps the PDSCH #1 to the resource set 1, and then maps the PDSCH #1 to the resource set 3. As shown in (b) in FIG. 6, the network device 110 first maps the PDSCH #1 to the resource set 3, and then maps the PDSCH #1 to the resource set 1. As shown in (c) in FIG. 6, the network device 110 maps the PDSCH #1 to the resource set 1 and the resource set 3 in a sequence of "frequency domain first and then time domain". It should be understood that, mapping the PDSCH #1 to the resource set 1 and the resource set 3 may alternatively be performed in a sequence of "time domain first and then frequency domain". This is not limited. For ease of description, in this application, the " frequency domain first and then time domain" is used as an example for description.

In FIG. 6, the network device 110 determines an available resource set 1 (for example, a first available resource set) based on the resource set 1 and the resource set 3 in a rate matching (rate-matching) manner. Each RE in the available resource set 1 can be used for encoding and decoding of the PDSCH #1. The available resource set 1 includes the resource set 1 and the resource set 3. For example, the network device 110 first performs channel encoding on raw data (which, for example, may be a medium access control (medium access control, MAC) protocol data unit (protocol data unit, PDU)) carried on the PDSCH #1. The raw data may be X bits, and Y bits are generated through channel encoding. Then, the network device 110 determines, based on the resource set 1 and the resource set 3, that a quantity of bits that can be transmitted on the available resource set 1 is Z, selects Z bits from the Y bits, and performs processing such as modulation, layer mapping, precoding (if any), and mapping to physical resources (that is, mapping to corresponding REs) on the Z bits. A relationship between X, Y, and Z is usually as follows: X≤Z≤Y. On a side of the terminal device 120, the terminal device 120 also needs to first determine, based on the resource set 1 and the resource set 3, that a quantity of bits that can be transmitted on the available resource set 1 is Z, so that an input length of a decoder can be set to Z and an output length of the decoder can be set to X, to correctly perform the decoding.

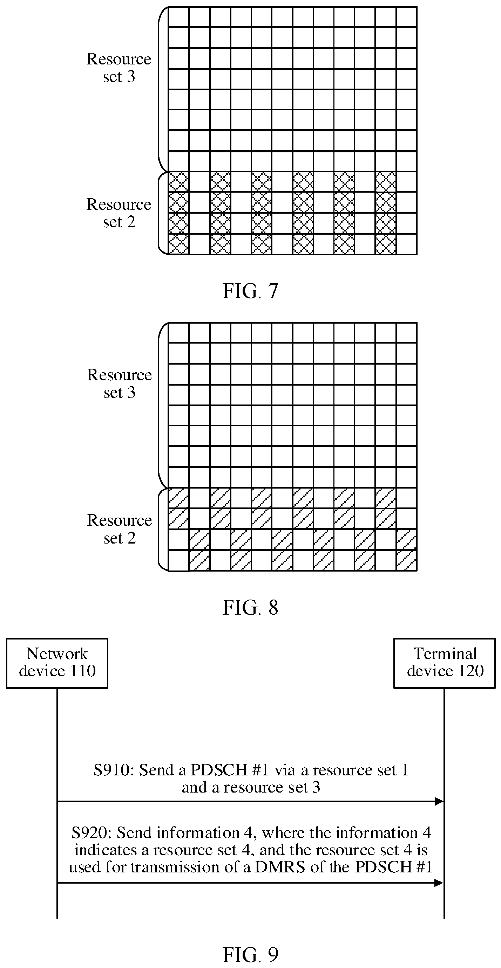

FIG. 7 is a diagram of resource mapping 700. One square indicates one RE. Specifically, the network device 110 maps the PDSCH #1 to each RE in the resource set 1 and each RE in the resource set 3. The network device 110 excludes, through puncturing (puncture), REs that cannot be reused in the resource set 2 (for the excluded REs, refer to squares with ×), and remaining REs are REs that can be reused in the resource set 2.

In FIG. 7, the network device 110 determines an available resource set 2 (for example, a second available resource set) based on the resource set 2 and the resource set 3 through puncturing. Each RE in the available resource set 2 can be used for the encoding and decoding of the PDSCH #1. The available resource set 2 includes the resource set 2 and the resource set 3. For example, the network device 110 first performs channel encoding on raw data (which, for example, may be a MAC PDU) carried on the PDSCH. The raw data may be X bits, and Y bits are generated through channel encoding. Then, the network device 110 determines, based on the resource set 2 and the resource set 3, that a quantity of bits that can be transmitted on the available resource set 2 is Q, selects Q bits from the Y bits, and performs processing such as modulation, layer mapping, precoding (if any), and mapping to physical resources (that is, mapping to corresponding REs) on the Q bits. After the Q bits are mapped to the corresponding REs, the network device 110 excludes an RE that cannot be reused, and a quantity of bits corresponding to remaining REs that can be reused is Z bits. A relationship between X, Y, Q, and Z is usually as follows: X≤Z≤Q≤Y. On a side of the terminal device 120, the terminal device 120 also needs to first determine, based on the resource set 2 and the resource set 3, that a quantity of bits that can be transmitted on the available resource set 2 is Q, so that an input length of a decoder can be set to Q and an output length of the decoder can be set to X, to correctly perform the decoding. In addition, if the terminal device 120 may further learn of the REs that cannot be reused in the REs corresponding to the Q bits, the terminal device 120 may perform, during the decoding, special processing (for example, set to 0) on signals corresponding to the REs, to improve decoding accuracy.

It should be noted that, in FIG. 6 and FIG. 7, a mapping relationship between the PDSCH #1 and the resource set 1 and the resource set 3 is described by using an example in which the wake-up signal is modulated by using the OOK. However, the wake-up signal may alternatively be modulated by using the FSK. A difference between a mapping relationship between an FSK modulation-based PDSCH #1 and the resource set 1 and the resource set 3 and a mapping relationship between an OOK modulation-based PDSCH #1 and the resource set 1 and the resource set 3 lies in: When the wake-up signal is modulated by using the OOK, a part of time domain resources in the resource set 2 may be reused, and all frequency domain resources may be reused; or when the wake-up signal is modulated by using the FSK, all time domain resources in the resource set 2 may be reused, and a part of frequency domain resources may be reused. For details, refer to FIG. 8.

FIG. 8 is a diagram of resource mapping 800. As shown in FIG. 8, the network device 110 maps the PDSCH #1 to squares with a slash texture (the resource set 1) in the resource set 2, and the squares with the slash texture are on all time domain resources and a part of frequency domain resources. For a specific mapping sequence, refer to descriptions in FIG. 6 and FIG. 7. Details are not described herein again.

The following further describes the method 500 with reference to other accompanying drawings.

FIG. 9 is a schematic interaction flowchart of a resource indication method 900. A method procedure in FIG. 9 may be performed by a terminal device 120 and a network device 110, or may be performed by modules and/or components (for example, chips or integrated circuits) having corresponding functions and installed in the terminal device 120 and the network device 110. This is not limited. The following uses the terminal device 120 and the network device 110 as an example for description. As shown in FIG. 9, the method 900 includes the following steps.

S910: The network device 110 sends a PDSCH #1 to the terminal device 120 via a resource set 1 and a resource set 3.

Correspondingly, the terminal device 120 receives the PDSCH #1 from the network device 110 via the resource set 1 and the resource set 3.

For descriptions of S910, refer to descriptions of S520. Details are not described herein again.

S920: The network device 110 sends information 4 (for example, fourth information) to the terminal device 120, where the information 4 indicates a resource set 4 (for example, a fourth resource set), and the resource set 4 is used for transmission of a demodulation reference signal (demodulation reference signal, DMRS) of the PDSCH #1.

Correspondingly, the terminal device 120 receives the information 4 from the network device, and determines, based on the information 4, the resource set 4 used for transmission of the DMRS. The resource set 4 belongs to the resource set 3.

In a possible implementation, the information 4 may further indicate a resource set 5 (for example, a fifth resource set), and the resource set 5 is used for transmission of the DMRS of the PDSCH #1. The resource set 5 belongs to a resource set 2.

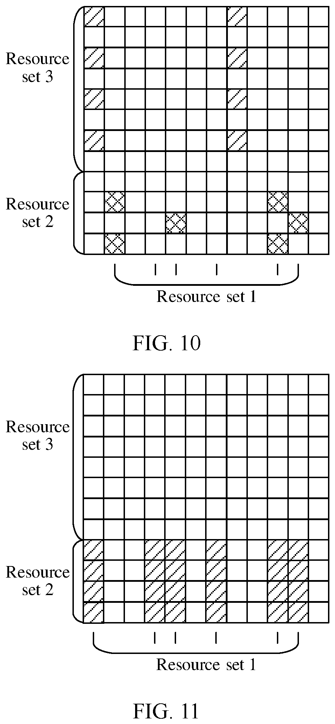

In a possible implementation, the information 4 does not indicate the resource set 5, but the resource set 4 indicated by the information 4 may be used for determining the resource set 5. Specifically, a relationship between the resource set 4 and the resource set 5 may be predefined in a protocol. For example, a time domain position of an RE that is used for transmission of the DMRS and that is in the resource set 2 is an earliest symbol not earlier than a time domain position of an RE that is used for transmission of the DMRS and that is in the resource set 3. For details, refer to FIG. 10.

FIG. 10 is a diagram of resource mapping 1000. As shown in FIG. 10, the RE that is used for transmission of the DMRS and that is in the resource set 3 is indicated by a square with a slash texture, and the RE that is used for transmission of the DMRS and that is in the resource set 2 is indicated by a square with a cross texture. Specifically, the position of the RE that is used for transmission of the DMRS and that is in the resource set 3 may be indicated in a manner of the information 4; and the RE that is used for transmission of the DMRS and that is in the resource set 2 may also be indicated in the manner of the information 4, or may be specified in a manner of protocol definition. This is not limited.

In a possible implementation, when the resource set 5 is indicated by using the information 4, the network device 110 may indicate the resource set 5 to the terminal device 120 via a bitmap (bitmap). For example, in FIG. 10, a bitmap corresponding to the resource set 5 is 010010000110, where 1 indicates that a corresponding symbol carries the DMRS.

Optionally, in this application, patterns (patterns) of a plurality of different types of DMRSs can be predefined. The network device 110 indicates a specific type of the pattern of the DMRS to the terminal device 120. In this way, bit overheads for indicating the pattern of the DMRS can be reduced.

FIG. 11 is a diagram of an application of resource indication 1100. As shown in FIG. 11, one block indicates one RE. For a position of the resource set 1 in the resource set 2, refer to squares with a twill texture. An example in which a wake-up signal is modulated by using OOK is used for description.

Specifically, when the network device 110 determines to send a wake-up signal 1 to the terminal device 110 by using the resource set 2 shown in FIG. 11, the network device 110 may further select the resource set 1 in the resource set 2 to send a PDSCH to the terminal device 120. The terminal device 120 needs to be determined in a specific manner. For example, a moving speed of a terminal device 1 is fast, a channel change is sharp, and two symbols are required to carry the DMRS. A moving speed of a terminal device 2 is slow, a channel change is mild, and only one symbol is required to carry the DMRS. If it is determined that the terminal device 1 is the terminal device 120, positions of symbols that are used for transmission of the DMRS and that are in the resource set 1 and the resource set 3 need to be changed, and this causes high complexity of channel estimation of the terminal device 120. If it is determined that the terminal device 2 is the terminal device 120, positions of symbols that are used for transmission of the DMRS and that are in the resource set 1 and the resource set 3 do not need to be changed, and this causes low complexity of channel estimation of the terminal device 120.

In conclusion, the network device 110 may determine an appropriate terminal device pair, so that not only high resource utilization can be implemented, but also PDSCH demodulation performance can be improved. In addition, the complexity of the channel estimation is not increased.

The foregoing describes the method embodiments in embodiments of this application, and the following describes corresponding apparatus embodiments.

To implement functions in the methods provided in embodiments of this application, both the terminal and the network device may include a hardware structure and/or a software module, and implement the foregoing functions in a form of a hardware structure, a software module, or a hardware structure plus a software module. Whether a specific function in the foregoing functions is performed by using the hardware structure, the software module, or the hardware structure plus the software module depends on particular applications and design constraints of the technical solutions.

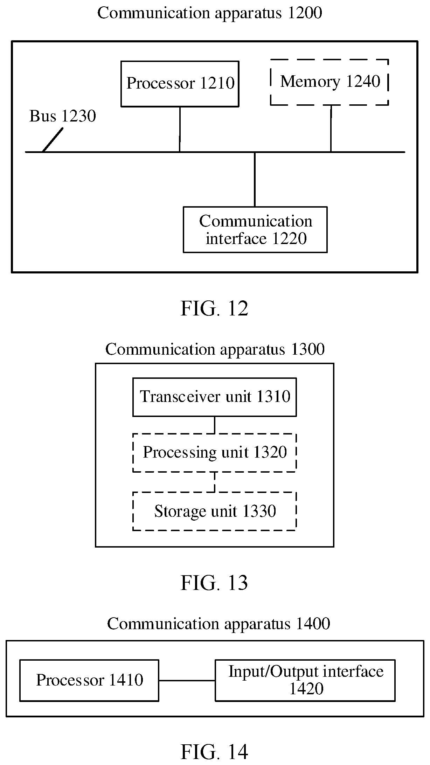

FIG. 12 is a block diagram of a communication apparatus 1200 according to an embodiment of this application. The communication apparatus 1200 includes a processor 1210 and a communication interface 1220. The processor 1210 and the communication interface 1220 may be connected to each other through a bus 1230. The communication apparatus 1200 may be configured to implement a function of a network device 110, may be configured to implement a function of a network device 120, or may be configured to implement a function of a core network element 130.

Optionally, the communication apparatus 1200 further includes a memory 1240.

The memory 1240 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can be used for carrying or storing expected program code in a form of instructions or a data structure and that can be accessed by a computer, but is not limited thereto. For example, the memory 12120 is configured to store related instructions and data.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. Steps of the methods disclosed with reference to embodiments of this application may be directly performed and completed by a hardware processor, or may be performed and completed by using a combination of hardware in the processor and a software module. For example, the processor 1210 may be one or more central processing units (central processing units, CPUs). When the processor 1210 is one CPU, the CPU may be a single-core CPU, or may be a multi-core CPU.

When the communication apparatus 1200 is configured to implement the function of the network device 110, for example, the processor 1210 is configured to perform the following operations: send information 1 to the terminal device 120, where the information 1 is used for scheduling a PDSCH #1, the information 1 further indicates a time domain resource A and a frequency domain resource A that are used for transmission of the PDSCH #1, and the frequency domain resource A includes a frequency domain resource 1; and send the PDSCH #1 to the terminal device 120 by using a resource set 1.

The foregoing content is merely used as an example for description. When the communication apparatus 1200 is configured to implement the function of the network device 110, the communication apparatus 1200 is responsible for performing the method or steps related to the network device 110 in the foregoing method embodiments.

When the communication apparatus 1200 is configured to implement the function of the terminal device 120, for example, the processor 1210 is configured to perform the following operations: receive information 1 from the network device 110; and receive a PDSCH #1 from the network device 110.

The foregoing content is merely used as an example for description. When the communication apparatus 1200 is configured to implement the terminal device 120, the communication apparatus 1200 is responsible for performing the method or steps related to the terminal device 120 in the foregoing method embodiments.

The foregoing descriptions are merely an example for description. For specific content, refer to content shown in the foregoing method embodiments. In addition, for implementation of operations in FIG. 12, refer to corresponding descriptions in the method embodiments shown in FIG. 5 to FIG. 11.

FIG. 13 is a block diagram of a communication apparatus 1300 according to an embodiment of this application. The communication apparatus 1300 may be the network device or the terminal device in the foregoing embodiments, or may be a chip or a module in the network device or the terminal device, and is configured to implement the methods in the foregoing embodiments. The communication apparatus 1300 includes a transceiver unit 1310. The following describes the transceiver unit 1310 by using an example.

The transceiver unit 1310 may include a sending unit and a receiving unit that are respectively configured to implement a sending function or a receiving function in the foregoing method embodiments. A processing unit 1320 may be further included configured to implement a function other than the sending function or the receiving function.

When the communication apparatus 1300 is configured to implement a function of a network device 110, for example, the transceiver unit 1310 is configured to: send information 1 to a terminal device 120; and the transceiver unit 1310 is further configured to: send a PDSCH #1 to the terminal device 120.

Optionally, the communication apparatus 1300 further includes the processing unit 1320. The processing unit 1320 is configured to process a method or step involving judging or determining.

Optionally, the communication apparatus 1300 further includes a storage unit 1330. The storage unit 1330 is configured to store a program or code used for performing the foregoing methods.

The foregoing content is merely used as an example for description. When the communication apparatus 1300 is configured to implement the network device 110, the communication apparatus 1300 is responsible for performing the method or steps related to the network device 110 in the foregoing method embodiments.

The communication apparatus 1300 is the terminal device 120. For example, the transceiver unit 1310 is configured to: receive information 1 from the network device 110; and the transceiver unit 1310 is further configured to: receive a PDSCH #1 from the network device 110.

Optionally, the communication apparatus 1300 further includes a storage unit 1330. The storage unit is configured to store a program or code used for performing the foregoing methods.

The foregoing content is merely used as an example for description. When the communication apparatus 1300 is configured to implement the terminal device 120, the communication apparatus 1300 is responsible for performing the method or steps related to the terminal device 120 in the foregoing method embodiments.

In addition, for implementation of operations in FIG. 13, refer to corresponding descriptions of content shown in the foregoing method embodiments. Details are not described herein again.

The communication apparatuses shown in FIG. 12 and FIG. 13 are configured to implement the content described in the foregoing method embodiments. Therefore, for specific execution steps and methods of the communication apparatuses shown in FIG. 12 and FIG. 13, refer to the content described in the foregoing method embodiments.

It should be understood that, the transceiver unit may include the sending unit and the receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below.

FIG. 14 is a diagram of a communication apparatus 1400 according to an embodiment of this application. The communication apparatus 1400 may be configured to implement a function of the network device 110 in the foregoing methods or a function of the terminal device 120 in the foregoing methods. The communication apparatus 1400 may be a chip in the network device 110 or the terminal device 120. The communication apparatus 1400 includes an input/output interface 1420 and a processor 1410. The input/output interface 1420 may be an input/output circuit. The processor 1410 may be a signal processor, a chip, or another integrated circuit that can implement the methods in this application. The input/output interface 1420 is configured to input or output a signal or data.

For example, the communication apparatus 1400 is the network device 110, and the input/output interface 1420 is configured to: send information 1 to the terminal device 120. The processor 1410 may be configured to: determine the information 1. The processor 1410 is further configured to perform a part or all of steps of either of the methods provided in this application.

For example, the communication apparatus 1400 is the terminal device 120, and the input/output interface 1420 is configured to: receive information 1 from the network device 110. The processor 1410 is configured to perform a part or all of steps of either of the methods provided in this application.

In a possible implementation, the processor 1410 executes instructions stored in a memory, to implement the function implemented by the network device 110 or the terminal device 120.

Optionally, the communication apparatus 1400 further includes a memory. Optionally, the processor and the memory are integrated together. Optionally, the memory is outside the communication apparatus 1400.

In a possible implementation, the processor 1410 may be a logic circuit, and the processor 1410 inputs/outputs a message or signaling through the input/output interface 1420. The logic circuit may be a signal processor, a chip, or another integrated circuit that can implement the methods in embodiments of this application.

The foregoing descriptions of the communication apparatus 1400 in FIG. 14 are merely an example for description. The communication apparatus 1400 can be configured to perform the methods in the foregoing embodiments. For specific content, refer to descriptions in the foregoing method embodiments. Details are not described herein again.

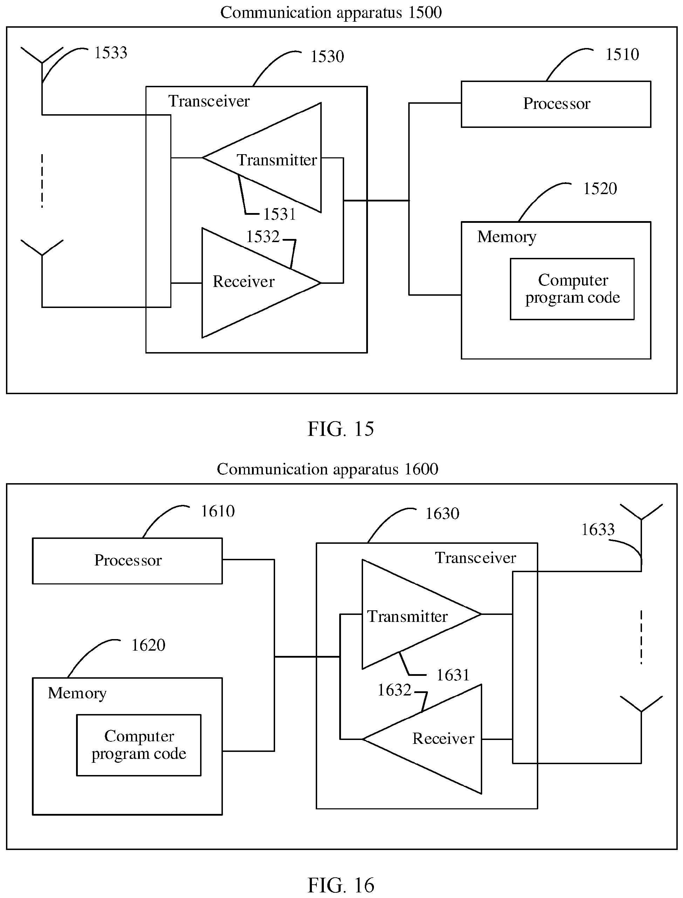

FIG. 15 is a block diagram of a communication apparatus 1500 according to an embodiment of this application. The communication apparatus 1500 may be a network device or a chip. The communication apparatus 1500 may be configured to perform operations performed by the network device in the foregoing method embodiments.

When the communication apparatus 1500 is the network device, for example, a base station. FIG. 15 a simplified diagram of a structure of the base station. The base station includes a unit 1510, a unit 1520, and a unit 1530. The unit 1510 is mainly configured to perform baseband processing, control the base station, and the like. The unit 1510 is usually a control center of the base station, may be usually referred to as a processor, and is configured to control the base station to perform a processing operation on a side of the network device in the foregoing method embodiments. The unit 1520 is mainly configured to store computer program code and data. The unit 1530 is mainly configured to receive and send a radio frequency signal, and perform conversion between the radio frequency signal and a baseband signal. The unit 1530 may be usually referred to as a transceiver module, a transceiver device, a transceiver circuit, a transceiver, or the like. A transceiver module of the unit 1530 may also be referred to as a transceiver device, a transceiver, or the like, and includes an antenna 1533 and a radio frequency circuit (not shown in FIG. 15), where the radio frequency circuit is mainly configured to perform radio frequency processing. Optionally, a component that is configured to implement a receiving function and that is in the unit 1530 may be considered as a receiver, and a component that is configured to implement a sending function may be considered as a transmitter. In other words, the unit 1530 includes a receiver 1532 and a transmitter 1531. The receiver may also be referred to as a receiving module, a receiver device, a receiver circuit, or the like, and the transmitter may be referred to as a transmitting module, a transmitter device, a transmitter circuit, or the like.

The unit 1510 and the unit 1520 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, one or more processors may alternatively be shared by the plurality of boards, or one or more memories may be shared by the plurality of boards, or one or more processors may be simultaneously shared by the plurality of boards.

In an implementation, the transceiver module of the unit 1530 is configured to perform a receiving and sending-related process performed by the network device in embodiments shown in FIG. 5 to FIG. 11. The processor of the unit 1510 is configured to perform a processing-related process performed by the network device in embodiments shown in FIG. 5 to FIG. 11.

In another implementation, the processor of the unit 1510 is configured to perform a processing-related process performed by a communication device in embodiments shown in FIG. 5 to FIG. 11.

In another implementation, the transceiver module of the unit 1530 is configured to perform a receiving and sending-related process performed by a communication device in embodiments shown in FIG. 5 to FIG. 11.

It should be understood that, FIG. 15 is merely an example rather than a limitation, and the foregoing network device including the processor, the memory, and the transceiver may not depend on structures shown in FIG. 12 to FIG. 14.

When the communication apparatus 1500 is the chip, the chip includes a transceiver, a memory, and a processor. The transceiver may be an input/output circuit or a communication interface. The processor is a processor, a microprocessor, or an integrated circuit integrated on the chip. A sending operation of the network device in the foregoing method embodiments may be understood as output of the chip, and a receiving operation of the network device in the foregoing method embodiments may be understood as input of the chip.

FIG. 16 is a block diagram of a communication apparatus 1600 according to an embodiment of this application. The communication apparatus 1600 may be a terminal device, a processor of the terminal device, or a chip. The communication apparatus 1600 may be configured to perform an operation performed by the terminal device or the communication device in the foregoing method embodiments.

When the communication apparatus 1600 is the terminal device (a first communication apparatus or a second communication apparatus is the terminal device), FIG. 16 is a simplified diagram of a structure of the terminal device. As shown in FIG. 16, the terminal device includes a processor, a memory, and a transceiver. The memory may store computer program code, and the transceiver includes a transmitter 1631, a receiver 1632, a radio frequency circuit (not shown in FIG. 16), an antenna 1633, and an input/output apparatus (not shown in FIG. 16).

The processor is mainly configured to process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that, some types of terminal devices may not have the input/output apparatus.

When the data needs to be sent, after performing baseband processing on to-be-sent data, the processor outputs a baseband signal to the radio frequency circuit; and the radio frequency circuit performs radio frequency processing on the baseband signal and then sends a radio frequency signal to the outside in the form of the electromagnetic wave through the antenna. When the data is sent to the terminal device, the radio frequency circuit receives the radio frequency signal through the antenna, converts the radio frequency signal into the baseband signal, and outputs the baseband signal to the processor. The processor converts the baseband signal into data, and processes the data. For ease of description, only one memory, one processor, and one transceiver are shown in FIG. 16. In an actual terminal device product, there may be one or more processors and one or more memories. The memory may also be referred to as a storage medium, a storage device, or the like. The memory may be arranged independent of the processor, or may be integrated with the processor. This is not limited in this application.

In embodiments of this application, the antenna and the radio frequency circuit that have receiving and sending functions may be considered as a transceiver module of the terminal device, and the processor that has a processing function may be considered as a processing module of the terminal device.

As shown in FIG. 16, the terminal device includes a processor 1610, a memory 1620, and a transceiver 1630. The processor 1610 may also be referred to as a processing unit, a processing board, a processing module, a processing apparatus, or the like. The transceiver 1630 may also be referred to as a transceiver unit, a transceiver device, a transceiver apparatus, or the like.

Optionally, a component that is configured to implement a receiving function and that is in the transceiver 1630 may be considered as a receiving module, and a component that is configured to implement a sending function and that is in the transceiver 1630 may be considered as a sending module. In other words, the transceiver 1630 includes a receiver device and a sender device. The transceiver may also sometimes be referred to as a transceiver device, a transceiver module, a transceiver circuit, or the like. The receiver device may also sometimes be referred to as a receiver, a receiving module, a receiver circuit, or the like. The sender device may also sometimes be referred to as a transmitter, a transmitting module, a transmitter circuit, or the like.

For example, in an implementation, the processor 1610 is configured to perform a processing action on a side of the terminal device in embodiments shown in FIG. 5 to FIG. 11, and the transceiver 1630 is configured to perform receiving and sending actions on the side of the terminal device in FIG. 5 to FIG. 11.

For example, in an implementation, the processor 1610 is configured to perform a processing action on a side of the terminal device in embodiments shown in FIG. 5 to FIG. 11, and the transceiver 1630 is configured to perform receiving and sending actions on the side of the terminal device in FIG. 5 to FIG. 11.

It should be understood that, FIG. 16 is merely an example rather than a limitation, and the foregoing terminal device including the transceiver module and the processing module may not depend on structures shown in FIG. 12 to FIG. 14.

When the communication apparatus 1600 is the chip, the chip includes a processor, a memory, and a transceiver. The transceiver may be an input/output circuit or a communication interface. The processor may be a processing module, a microprocessor, or an integrated circuit integrated on the chip. A sending operation of the terminal device in the foregoing method embodiments may be understood as output of the chip, and a receiving operation of the terminal device in the foregoing method embodiments may be understood as input of the chip.

This application further provides a chip, including a processor. The processor is configured to invoke, from a memory, instructions stored in the memory and run the instructions, so that a communication device in which the chip is installed performs the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes a memory, and the memory is configured to store a computer program or code.

This application further provides a processor. The processor is configured to be coupled to a memory, and configured to perform a method and a function that are related to a network device or a terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

This application further provides a communication system. The communication system includes a network device 110, a network device 120, and a core network element. The network device 110 is configured to perform the foregoing methods, the network device 120 is configured to perform the foregoing methods, and the core network element 130 is configured to perform the foregoing methods. For specific descriptions, refer to the foregoing descriptions. Details are not described herein again.

In descriptions of embodiments of this application, unless otherwise specified, "a plurality of" means two or more. "At least one item (piece) of the following" or a similar expression thereof means any combination of these items, including a singular item (piece) or any combination of a plurality of items (pieces). For example, at least one item (piece) of a, b, or c may indicate: a, b, c, a-b, a-c, b-c, or a-b-c, where a, b, and c may be singular or may be plural.

In addition, to clearly describe the technical solutions in embodiments of this application, words such as "first" and "second" are used in embodiments of this application to distinguish same items or similar items that have basically same functions and roles. A person skilled in the art may understand that, the words such as "first" and "second" do not limit a quantity and an execution sequence, and the words such as "first" and "second" do not limit a specific difference. In addition, in embodiments of this application, a word such as "example" or "for example" is used for representing an example, an illustration, or a description.

In descriptions of embodiments of this application, unless otherwise specified, "/" indicates that associated objects are in an "or" relationship. For example, A/B may indicate A or B. "And/or" in this application merely describes an association relationship between the associated objects, and indicates that three relationships may exist. For example, A and/or B may indicate the following cases: Only A exists, both A and B exist, and only B exists, where A and B may be singular or plural.

In embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps can be implemented by electronic hardware or a combination of computer software and electronic hardware. Whether the functions are performed in a hardware or software manner depend on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In a plurality of embodiments provided in this application, it should be understood that, the disclosed system, apparatuses, and methods may be implemented in other manners. For example, the apparatus embodiments described above are merely an example. For example, division of the units is merely logical function division. In an actual implementation, there may be another division manner. For example, a plurality of units or components may be combined or integrated into another system, or some features may be ignored or not performed.

In addition, displayed or discussed mutual couplings or direct couplings or communication connections may be implemented through some interfaces. The indirect couplings or communication connections between the apparatuses or the units may be in electronic, mechanical, or other forms.

Units described as separate parts may or may not be physically separate, and parts displayed as units may or may not be physical units, to be specific, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to a conventional technology, or a part of the technical solutions may be embodied in a form of a software product. The computer software product is stored in a storage medium, and includes a plurality of instructions for instructing a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise specified or there is a logical conflict, terms and/or descriptions in different embodiments are consistent and may be mutually referenced. Technical features in different embodiments may be combined based on an internal logical relationship thereof, to form a new embodiment.

It may be understood that, in embodiments of this application, the terminal device, the access network device, or the core network device may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application are performed.

## Claims

1. A resource indication method, comprising:
sending first information to a first terminal device, wherein the first information is used for scheduling a physical downlink shared channel PDSCH, the first information further indicates a time domain resource and a frequency domain resource that are used for transmission of the PDSCH, and the frequency domain resource comprises a first frequency domain resource; and
sending the PDSCH to the first terminal device via a first resource set, wherein
the first resource set is a part of a second resource set, and the second resource set corresponds to the first frequency domain resource and the time domain resource.

2. The method according to claim 1, wherein the frequency domain resource further comprises a second frequency domain resource, and the sending the PDSCH to the first terminal device comprises:
sending the PDSCH to the first terminal device via the first resource set and a third resource set, wherein
the third resource set corresponds to the second frequency domain resource and the time domain resource.

3. The method according to claim 2, wherein before the sending first information to a first terminal device, the method further comprises:
sending second information to the first terminal device, wherein
the second information indicates a first frequency domain range and a second frequency domain range, the first frequency domain resource is in the first frequency domain range, and the second frequency domain resource is in the second frequency domain range.

4. The method according to any one of claims 1 to 3, wherein before the sending the PDSCH to the first terminal device, the method further comprises:
sending third information to the first terminal device, wherein the third information indicates at least one of a time domain position of the first resource set in the second resource set and a frequency domain position of the first resource set in the second resource set.

5. The method according to any one of claims 2 to 4, wherein a method for mapping the PDSCH to the first resource set and the third resource set comprises one of the following:
first mapping the PDSCH to the first resource set, and then mapping the PDSCH to the third resource set;
first mapping the PDSCH to the third resource set, and then mapping the PDSCH to the first resource set; or
first mapping the PDSCH to the second frequency domain resource and a frequency domain resource corresponding to the first resource set, and then mapping the PDSCH to the time domain resource.

6. The method according to any one of claims 2 to 5, wherein before the sending the PDSCH to the first terminal device, the method further comprises:
determining a first available resource set based on the first resource set and the third resource set, wherein the first available resource set is used for encoding and decoding of the PDSCH; or
determining a second available resource set based on the second resource set and the third resource set, wherein the second available resource set is used for encoding and decoding of the PDSCH, and the second available resource set comprises the first resource set.

7. The method according to any one of claims 2 to 6, wherein the method further comprises:
sending fourth information to the first terminal device, wherein
the fourth information indicates a fourth resource set and a fifth resource set, and the fourth resource set and the fifth resource set are used for transmission of a demodulation reference signal DMRS of the PDSCH; and
the fourth resource set belongs to the first resource set, and the fifth resource set belongs to the third resource set.

8. The method according to any one of claims 2 to 6, wherein the method further comprises:
sending fifth information to the first terminal device, wherein
the fifth information indicates a sixth resource set, the sixth resource set is used for transmission of a demodulation reference signal DMRS of the PDSCH, and the sixth resource set belongs to the third resource set; and
the sixth resource set is further used for determining a seventh resource set, the seventh resource set is used for transmission of the DMRS, and the seventh resource set belongs to the first resource set.

9. The method according to any one of claims 1 to 8, wherein the second resource set is used for transmission of a wake-up signal, and the wake-up signal is used for waking up a second terminal device.

10. The method according to claim 9, wherein the first resource set is further used for transmission of the wake-up signal.

11. A resource indication method, comprising:
receiving first information from a network device, wherein the first information is used for scheduling a physical downlink shared channel PDSCH, the first information further indicates a time domain resource and a frequency domain resource that are used for transmission of the PDSCH, and the frequency domain resource comprises a first frequency domain resource; and
receiving the PDSCH from the network device via a first resource set, wherein
the first resource set is a part of a second resource set, and the second resource set corresponds to the first frequency domain resource and the time domain resource.

12. The method according to claim 11, wherein the frequency domain resource further comprises a second frequency domain resource, and the receiving the PDSCH from the network device via a first resource set comprises:
receiving the PDSCH from the network device via the first resource set and a third resource set, wherein
the third resource set corresponds to the second frequency domain resource and the time domain resource.

13. The method according to claim 12, wherein before the receiving first information from a network device, the method further comprises:
receiving second information from the network device, wherein
the second information indicates a first frequency domain range and a second frequency domain range, the first frequency domain resource is in the first frequency domain range, and the second frequency domain resource is in the second frequency domain range.

14. The method according to any one of claims 11 to 13, wherein before the receiving the PDSCH from the network device, the method further comprises:
receiving third information from the network device, wherein the third information indicates at least one of a time domain position of the first resource set in the second resource set and a frequency domain position of the first resource set in the second resource set.

15. The method according to any one of claims 12 to 14, wherein a method for mapping the PDSCH to the first resource set and the third resource set comprises one of the following:
first mapping the PDSCH to the first resource set, and then mapping the PDSCH to the third resource set;
first mapping the PDSCH to the third resource set, and then mapping the PDSCH to the first resource set; or
first mapping the PDSCH to the second frequency domain resource and a frequency domain resource corresponding to the first resource set, and then mapping the PDSCH to the time domain resource.

16. The method according to any one of claims 12 to 15, wherein before the receiving the PDSCH from the network device, the method further comprises:
determining a first available resource set based on the first resource set and the third resource set, wherein the first available resource set is used for encoding and decoding of the PDSCH; or
determining a second available resource set based on the second resource set and the third resource set, wherein the second available resource set is used for encoding and decoding of the PDSCH, and the second available resource set comprises the first resource set.

17. The method according to any one of claims 12 to 16, wherein the method further comprises:
receiving fourth information from the network device, wherein
the fourth information indicates a fourth resource set and a fifth resource set, and the fourth resource set and the fifth resource set are used for transmission of a demodulation reference signal DMRS of the PDSCH; and
the fourth resource set belongs to the first resource set, and the fifth resource set belongs to the third resource set.

18. The method according to any one of claims 12 to 16, wherein the method further comprises:
receiving fifth information from the network device, wherein
the fifth information indicates a sixth resource set, the sixth resource set is used for transmission of a demodulation reference signal DMRS of the PDSCH, and the sixth resource set belongs to the third resource set; and
the sixth resource set is further used for determining a seventh resource set, the seventh resource set is used for transmission of the DMRS, and the seventh resource set belongs to the first resource set.

19. The method according to any one of claims 11 to 18, wherein the second resource set is used for transmission of a wake-up signal, and the wake-up signal is used for waking up a second terminal device.

20. The method according to claim 19, wherein the first resource set is further used for transmission of the wake-up signal.

21. A communication apparatus, comprising a processor, wherein the processor is configured to: cause, by executing a computer program or instructions or by using a logic circuit, the communication apparatus to perform the method according to any one of claims 1 to 20.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein the input/output interface is configured to input and/or output a signal; and
the logic circuit is configured to perform the method according to any one of claims 1 to 20.

25. A computer-readable storage medium, wherein the computer-readable storage medium stores a computer program or instructions; and
when the computer program or the instructions are run on a computer, the method according to any one of claims 1 to 20 is caused to be performed.

26. A computer program product, comprising instructions, wherein when the instructions are run on a computer, the method according to any one of claims 1 to 20 is caused to be performed.
